# FASCICULE DE BREVET EUROPEEN

(11) **EP 0 878 345 B1**
(45) Date de publication et mention de la délivrance du brevet: **01.08.2001**
(21) Numéro de dépôt: 98401105.6
(22) Date de dépôt: 06.05.1998
(51) Int. Cl.: B60N 2/22

(54) **Articulation pour siège, notamment pour véhicule automobile, et siège muni de cette articulation**
Gelenkbeschlag für Kraftfahrzeugsitze und Sitz mit einem solchen Gelenkbeschlag
Hinge fitting for automotive vehicle seats and seat provided with such an articulation

(30) Priorité: 15.05.1997 FR 9706001
(43) Date de publication de la demande: 18.11.1998
(73) Titulaire: FAURECIA SIEGES D'AUTOMOBILES S.A., 92100 Boulogne (FR)
(72) Inventeur: Blanchard, Jean-Marie, 45290 Nogent sur Vernisson (FR); Delatte, Olivier, 45290 Nogent sur Vernisson (FR); Di Luccio, Michel, 45290 Nogent sur Vernisson (FR); Guillemard, Philippe, 45290 Nogent sur Vernisson (FR); Rager, Sylvain, 45290 Nogent sur Vernisson (FR)
(74) Mandataire: Burbaud, Eric

(56) Documents cités:
- EP-A- 0 741 056
- EP-A- 0 773 132
- FR-A- 2 722 150
- FR-A- 2 739 812

## Description

La présente invention concerne une articulation pour siège, notamment pour véhicule automobile, et un siège muni de cette articulation.

On connaît déjà dans l'état de la technique une articulation pour siège, notamment pour véhicule automobile, du type comprenant
- au moins un flasque de liaison, destiné à être fixé à une assise ou un dossier du siège, et un flasque-support pouvant être assujetti à l'assise et/ou au dossier, les flasques étant montés rotatifs l'un par rapport à l'autre autour d'un axe d'articulation qui leur est sensiblement perpendiculaire, et
- au moins un levier de couplage des flasques entre eux muni d'une première extrémité montée pivotante sur le flasque-support, autour d'un axe de pivotement sensiblement parallèle à l'axe d'articulation, de manière que le levier de couplage puisse pivoter entre, d'une part, une position d'assujettissement d'une seconde extrémité de ce levier au flasque de liaison, par coopération de formes complémentaires, et d'autre part, une position de libération de cette seconde extrémité.

FR-A-2 722 150 décrit une articulation de ce type, pour siège de véhicule automobile, dans laquelle le levier de couplage est placé en position d'assujettissement du flasque de liaison au moyen d'une came de manoeuvre coopérant par effet de coin avec une contre-came de coincement ménagée dans le levier.

En cas de choc subi par le véhicule conduisant à un effort longitudinal violent exercé sur le dossier du siège, les flasques de l'articulation subissent un couple important pouvant les découpler accidentellement.

Ceci se produit notamment lorsque le couple accidentel s'exerce à l'encontre de l'effet de coin qui maintient en contact les cames de manoeuvre et de coincement.

L'invention a pour but d'éviter le découplage accidentel des flasques de l'articulation en cas de choc violent.

A cet effet, l'invention a pour objet une articulation pour siège, notamment pour véhicule automobile, du type précité, caractérisée en ce qu'elle comprend de plus des moyens de blocage de la seconde extrémité du levier en position d'assujettissement activés uniquement lorsque les flasques sont couplés entre eux et subissent un couple tendant à les découpler accidentellement.

Suivant d'autres caractéristiques de cette articulation :
- les moyens de blocage comprennent
   deux rampes complémentaires de blocage portées respectivement par le flasque-support et par la seconde extrémité du levier de couplage, ces rampes étant écartées entre elles lorsque le levier de couplage est en position d'assujettissement, et
   une zone d'affaiblissement du flasque-support déformable lorsque les flasques subissent le couple accidentel, de manière à permettre le déplacement relatif du levier de couplage par rapport au flasque-support jusqu'à mise en contact des rampes de blocage qui coopèrent pour bloquer la seconde extrémité du levier de couplage en position d'assujettissement au flasque de liaison ;
- l'axe de pivotement du levier de couplage est matérialisé par un pion de pivotement, porté par la première extrémité de ce levier, pivotant dans une lumière de pivotement ménagée dans le flasque-support, et la zone d'affaiblissement comporte une portion du flasque-support s'étendant entre la lumière de pivotement et une lumière d'affaiblissement qui est ménagée dans le flasque-support à proximité de la lumière de pivotement et entre cette lumière de pivotement et la rampe de blocage portée par le flasque-support ;
- le levier de couplage a une forme générale en arc, le contour intérieur de ce levier comportant une échancrure d'affaiblissement de ce levier permettant, lorsque les rampes de blocage coopèrent par effet du couple accidentel, une déformation du levier de couplage par modification de sa courbure ;
- l'articulation comporte un autre flasque de liaison avec le dossier ou l'assise et au moins un autre levier de couplage du flasque-support avec cet autre flasque de liaison, le flasque-support étant logé entre les deux flasques de liaison, les deux leviers de couplage étant articulés respectivement sur deux faces opposées du flasque-support ;
- les deux flasques de liaison sont destinés à être fixés respectivement à l'assise et au dossier du siège, l'articulation comprenant de plus, des moyens de manoeuvre des leviers de couplage entre une configuration de repos dans laquelle les leviers de couplage sont tous assujettis à leur flasque de liaison correspondant, pour coupler ces derniers et immobiliser le dossier par rapport à l'assise, et deux configurations actives alternatives dans laquelle un seul des leviers de couplage est assujetti à son flasque de liaison correspondant pour permettre, selon le cas, le réglage de l'inclinaison ou le rabattement temporaire du dossier;
- l'articulation comprend une paire de leviers de couplage associés à chaque flasque de liaison et disposés sensiblement symétriquement par rapport à l'axe d'articulation, les quatre leviers de couplage étant articulés en alternance sur les deux faces du flasque-support et sur des secteurs de ce flasque-support décalés parallèlement à l'axe d'articulation, chaque rampe de blocage portée par le flasque-support étant ménagée sur un secteur de ce flasque-support adjacent à un secteur sur lequel est articulé le levier de couplage portant la rampe de blocage complémentaire.

L'invention a également pour objet un siège pour véhicule automobile muni d'au moins une articulation telle que définie ci-dessus.

L'invention sera mieux comprise à la lecture de la description qui va suivre donnée uniquement à titre d'exemple et faite en se référant aux dessins dans lesquels:
- la figure 1 est une vue schématique en perspective d'un siège pour véhicule automobile muni d'au moins une articulation selon l'invention ;
- la figure 2 est une vue en perspective de cette articulation ;
- la figure 3 est une vue éclatée de l'articulation représentée à la figure 2 ;
- les figures 4 et 5 sont des vues de face, respectivement suivant les flèches 4 et 5, de l'articulation représentée à la figure 2, avec un arrachement du flasque de liaison pointé par les flèches 4 et 5 donnant accès visuellement à l'intérieur de l'articulation, les leviers de couplages étant dans leur position d'assujettissement aux flasques de liaison;
- la figure 6 est une vue similaire à la figure 4 dans laquelle les leviers de couplage sont dans leur position de libération de leur flasque de liaison correspondant;
- les figures 7 et 8 sont des vues suivant la flèche 7 de la figure 3 montrant un organe de commande de l'articulation dans deux positions différentes respectivement ;
- les figures 9 et 10 sont des demi-vues similaires à la figure 5, à échelle agrandie, montrant l'articulation respectivement avant et après avoir subi un couple accidentel.

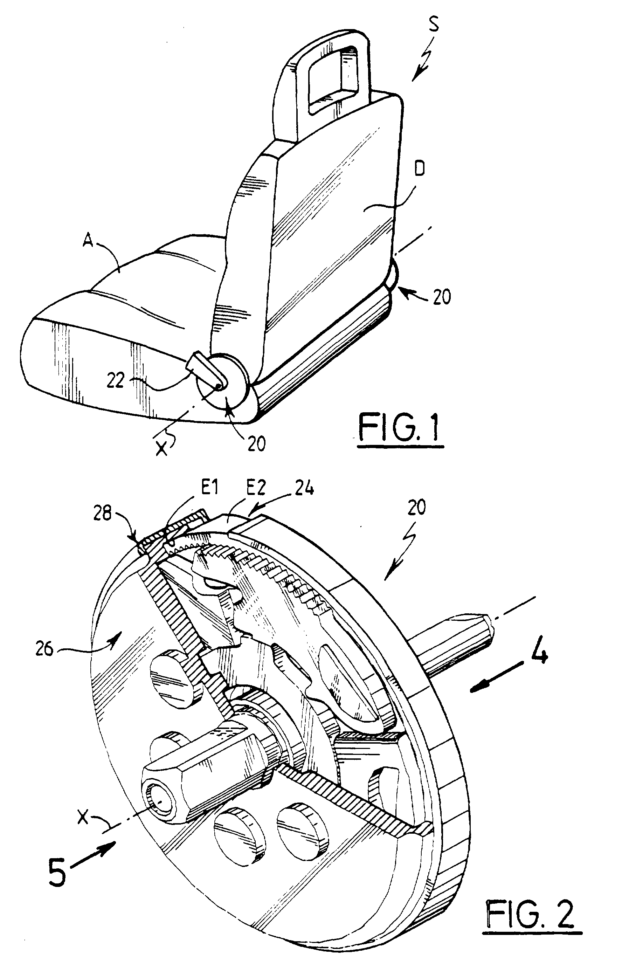

On a représenté sur la figure 1 un siège S pour véhicule automobile comportant un dossier D relié à une assise A par deux articulations 20 selon l'invention.

Les articulations 20 sont du même type que celui décrit dans FR-A-2 722 150 concernant une articulation dite "à mémoire". Ce type d'articulation permet notamment de rabattre le dossier du siège sur l'assise de ce dernier, par exemple pour accéder à une place à l'arrière de ce siège, et de relever le dossier en position d'utilisation, ceci sans modifier le réglage de l'inclinaison du dossier.

Chaque articulation 20 est la symétrique spéculaire de l'autre articulation.

Les articulations 20 sont commandées de préférence par une poignée 22 commune à ces deux articulations.

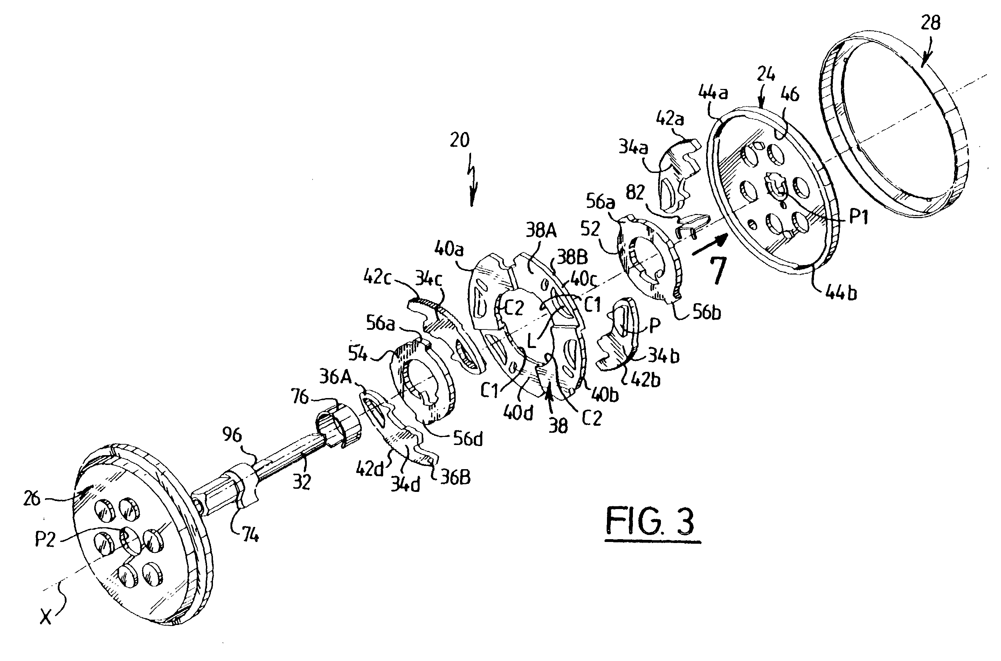

En se référant notamment aux figures 2 et 3, sur lesquelles on a représenté une articulation 20 plus en détail, on voit que celle-ci comporte deux flasques de liaison 24,26 de forme générale circulaire, l'un, fixe, étant fixé sur l'assise A, et l'autre, mobile, étant fixé sur le dossier D.

Les flasques de liaison 24,26 sont montés rotatifs l'un par rapport à l'autre autour d'un axe d'articulation X qui leur est sensiblement perpendiculaire, et sont maintenus l'un contre l'autre de façon connue en soi au moyen d'une bague de liaison 28.

Les flasques de liaison 24,26 sont centrés l'un par rapport à l'autre par des épaulements périphériques complémentaires E1,E2, coaxiaux à l'axe d'articulation X.

Les flasques de liaison 24,26 délimitent entre eux un logement pour des moyens 30 de couplage de ces flasques. Ces moyens 30 sont commandés par un organe 32 de forme générale cylindrique circulaire, sur lequel est fixée de façon connue en soi la poignée de commande 22.

L'organe de commande 32 est monté rotatif autour de l'axe d'articulation X dans deux paliers P1,P2, ménagés dans les flasques de liaison 24,26.

L'organe de commande 32 est déplaçable, par l'intermédiaire de la poignée 22, dans deux sens opposés à partir d'une position de repos, à savoir un sens horaire de réglage de l'inclinaison du dossier par rapport à l'assise et un sens anti-horaire de rabattement de ce dossier.

Les organes de commande 32 des deux articulations 20 sont reliés entre eux par un dispositif de couplage classique.

Les moyens de couplage 30 comprennent quatre leviers 34a à 34d, de préférence identiques, en forme générale d'arc, s'étendant sensiblement parallèlement aux flasques de liaison 24,26.

Une première extrémité 36A des leviers de couplage 34a à 34d est montée pivotante sur un flasque support 38 de forme générale circulaire, logé entre les flasques de liaison 24,26 de manière à pouvoir tourner par rapport à ces derniers autour de l'axe d'articulation X. Les flasques de liaison 24,26 et le flasque support 38 sont sensiblement parallèles entre eux.

La seconde extrémité 36B des leviers 34a à 34d est destinée à être assujettie à un flasque de liaison correspondant, par coopération de formes complémentaires définissant, lorsqu'elles sont en prise, une zone d'assujettissement du levier de couplage.

Chaque levier de couplage 34a à 34b est donc déplaçable autour de son axe de pivotement entre une position d'assujettissement de sa seconde extrémité 36B avec un flasque de liaison 34a à 34b correspondant et une position de libération de cette seconde extrémité 36B.

Les leviers de couplage 34a à 34d sont associés par paires aux flasques de liaison 24,26. Les deux leviers d'une même paire sont sensiblement symétriques par rapport à l'axe d'articulation X et sont articulés sur une même face 38A,38B du flasque-support, de manière que les quatre leviers 34a à 34d alternent sur les deux faces 38A,38D du flasque-support. Ces leviers 34a à 34d sont articulés sur des secteurs 40a à 40d du flasque-support décalés en alternance parallèlement à l'axe d'articulation X.

On notera que le flasque-support 38 peut être assujetti, par couplage avec l'un et/ou l'autre des flasques de liaison 24,26 au moyen des leviers 34a à 34d, à l'assise et/ou au dossier du siège.

Les formes complémentaires d'assujettissement sont délimitées de préférence par des dentures complémentaires. Ainsi, la seconde extrémité 36B des leviers de couplage 34a à 34d comporte un secteur denté 42a à 42d.

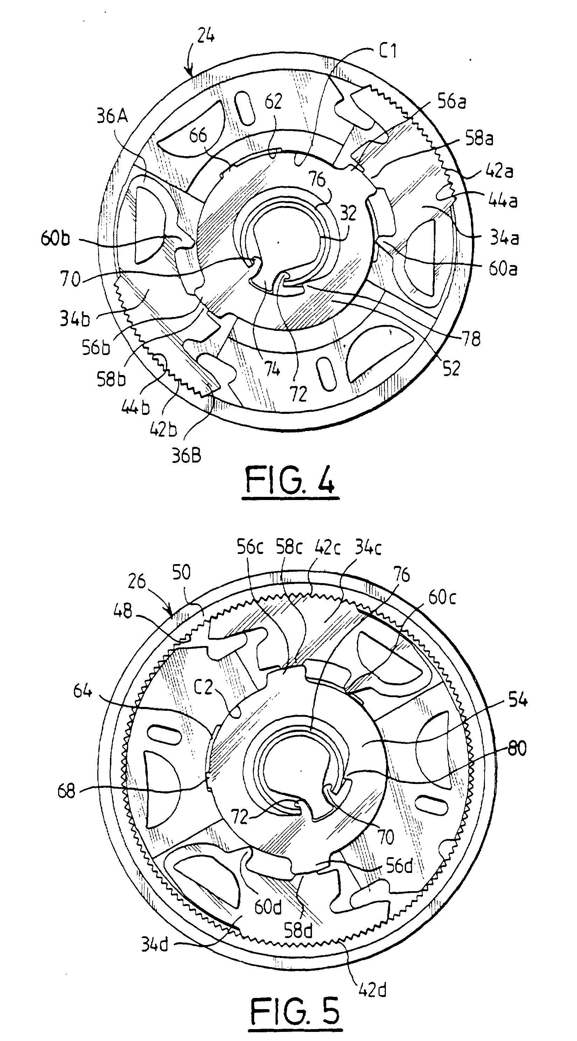

Les secteurs dentés 42a,42b de la paire de leviers de couplage 34a,34b associés au flasque fixe 24 sont destinés à coopérer avec des secteurs dentés 44a,44b de même angle ménagés sur le contour intérieur d'un épaulement périphérique 46 de ce flasque fixe 24, visible notamment sur les figures 3 et 4.

Les secteurs dentés 42c,42d de la paire de leviers de couplage 34c,34d associés au flasque mobile 26 sont destinés à coopérer avec un secteur denté 48 d'angle supérieur ménagé sur le contour intérieur d'un épaulement périphérique 50 du flasque mobile 26, visible notamment sur la figure 5. De préférence, ce secteur denté 48 s'étend sur toute la circonférence de l'épaulement 50 de manière à former une couronne dentée.

La première extrémité 36A des leviers de couplage 34a à 34b porte un pion de pivotement P, formé par exemple par une semi-découpe de cette extrémité 36A, monté pivotant dans une lumière de pivotement L ménagée dans le secteur correspondant 40a à 40d du flasque-support 38. Le pion P et la lumière L matérialisent un axe de pivotement de levier de couplage sensiblement parallèle à l'axe de rotation X.

Le pion P et la lumière L de basculement ont par exemple des formes générales en demi-lunes, la lumière L s'étendant suivant un secteur plus grand que celui du pion P.

On notera que chaque levier de couplage 34a à 34d peut basculer autour d'un point d'appui (matérialisé par la lumière L de basculement de ce levier) qui, lorsque ce levier est assujetti à un flasque de liaison 24,26, est fixe par rapport à ce même flasque.

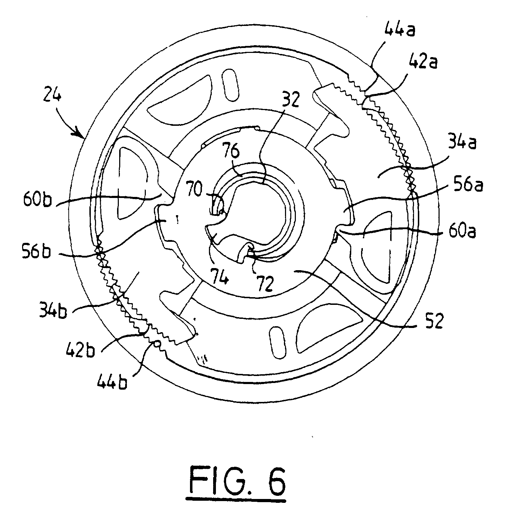

L'organe de commande 32 actionne des moyens de manoeuvre des leviers de couplage 34a à 34 d. Ces moyens de manoeuvre permettent de placer les leviers dans une configuration de repos, telle que représentée sur les figures 4 et 5, dans laquelle les deux flasques de liaison 24,26 sont couplés entre eux, et dans deux configurations actives alternatives, dont une seule est représentée sur la figure 6, dans laquelle les deux flasques de liaison 24,26 sont découplés.

Le fonctionnement normal d'une articulation à mémoire du type illustré sur les figures, pour le réglage de l'inclinaison et le rabattement du dossier est classique. Ce fonctionnement est décrit, par exemple, dans FR-A-2 722 150 dans lequel, notamment, les pênes 53 et grains 43 sont analogues aux leviers 34a à 34d décrits ci-dessus.

Dans la configuration de repos, les leviers de couplage 34a à 34d sont tous assujettis aux flasques de liaison 24,26, pour coupler ces derniers et immobiliser le dossier par rapport à l'assise.

Dans les deux configurations actives alternatives, une seule des paires de leviers de couplage 34a à 34d est assujettie au flasque de liaison 24,26 correspondant pour permettre, alternativement, le réglage de l'inclinaison du dossier ou, comme dans le cas représenté à la figure 6, le rabattement temporaire de ce dossier.

Les moyens de manoeuvre comprennent deux bagues rotatives 52,54 centrées sur l'axe d'articulation X, par exemple au moyen de deux paires d'arcs circulaires C1,C2, délimitant une ouverture centrale du flasque-support 38, coopérant avec les contours externes des bagues. Les arcs de centrage C1,C2 d'une même paire délimitent deux secteurs diamétralement opposés 40c,40d,40a,40b du flasque-support 38.

Les bagues 52,54 sont déplaçables dans deux sens opposés pour le réglage d'inclinaison et le rabattement du dossier respectivement. A cet effet, chaque bague 52,54 est associée à une paire de leviers de couplage 34a à 34d, de manière à être déplaçable entre une première position d'assujettissement des leviers de cette paire au flasque de liaison 24,26 correspondant et une seconde position de libération de ces leviers.

En se référant notamment aux figures 4 à 6, on voit que chaque bague 52,54 comprend une paire de cames de manoeuvre 56a à 56d, diamétralement opposées, délimitées par des bossages ménagés sur le contour externe de la bague.

Lorsqu'une bague 52,54 est dans sa première position d'assujettissement, comme cela est représenté sur les figures 4 et 5, chaque came de manoeuvre 56a à 56d coopère avec une contre-came de coincement 58a à 58d, délimitée par un bossage ménagé sur le contour interne d'un levier de couplage 34a à 34d correspondant, à proximité de la seconde extrémité 36B de ce levier.

Lorsqu'une bague 52,54 est dans sa seconde position de libération, comme cela est représenté sur la figure 6 (dans le cas de la bague 52), chaque came de manoeuvre 56a à 56d coopère avec une contre-came de basculement 60a à 60d, délimitée par un bossage ménagé sur le contour interne d'un levier de couplage 34a à 34d correspondant, à proximité de la première extrémité 36A de ce levier.

On notera que le déplacement angulaire de chaque bague 52,54 est limité par la dimension angulaire d'un dégagement 62,64, ménagé dans un arc de centrage C1,C2 correspondant, dans lequel s'étend un onglet 66,68 solidaire du contour externe de la bague 52,54.

Les bagues 52,54 comprennent chacune un ergot de déplacement 70,72 ménagé sur leur contour interne.

L'organe de commande 32 est muni d'une came 74 de déplacement des bagues 52,54, interposée entre les deux ergots 70,72. La came de déplacement 74 coopère sélectivement avec les deux ergots 70,72, qui forment ainsi des contre-cames de déplacement, par rotation dans des sens opposés de réglage d'inclinaison et de rabattement du dossier respectivement.

Lorsque les moyens de manoeuvre sont dans la configuration de repos, l'organe de commande 32 est dans la position de repos telle que représentée aux figures 4 et 5, vers laquelle il est rappelé élastiquement par des moyens qui seront décrits ci-dessous.

Les moyens de rappel élastique comprennent des moyens de positionnement approché de l'organe de commande.

Ces moyens de positionnement approché comportent un ressort 76 à effet angulaire accroché sur les ergots 70,74 de manière à rappeler élastiquement les bagues 52,54 dans des sens opposés, vers leur position d'assujettissement, c'est-à-dire leur position de coopération des cames de manoeuvre 56a à 56d avec les contre-cames de coincement 58a à 58c.

Ainsi, le ressort 76 rappelle l'organe de commande 32 en position de repos approchée par coopération des deux ergots 70,72 avec la came de déplacement 74 de cet organe de commande.

Le ressort 76 est constitué par exemple par un anneau fendu dont les bords axiaux sont accrochés dans les ergots 70,72.

De préférence, chaque bague 52,54 comporte un bossage 78,80 ménagé sur son contour interne, de l'autre côté de son ergot 70,72 par rapport à la came d'entraînement 74 de l'organe de commande, de manière à participer au positionnement et au centrage du ressort 76 à effet angulaire.

Les moyens de rappel élastique comprennent également des moyens de positionnement précis de l'organe de commande 32 affinant la position de repos approchée de cet organe 32, représentés sur les figures 3,7 et 8.

Ces moyens de positionnement précis comprennent au moins un ressort de poussée 82, en forme de lame pliée en U, comportant deux branches planes 84,86 s'étendant sensiblement longitudinalement parallèlement à l'axe d'articulation X.

Une première branche 84, fixe, est en appui radial contre le flasque fixe 24, plus particulièrement contre le bord d'un dégagement 88 du contour du palier P1 du flasque fixe 24.

La seconde branche 86, mobile, est en appui radial contre un méplat 90 de positionnement de l'organe de commande 32.

Le ressort de poussée 82 sollicite le méplat 90 dans une position sensiblement parallèle à celle de ses branches 84,86 coïncidant avec la position de repos précise de l'organe de commande 32.

De préférence, le méplat 90 est délimité par une surface sensiblement concave, de manière à limiter le contact de la branche mobile 86 avec ce méplat 90 sensiblement à deux génératrices de l'organe de commande 32.

L'extrémité libre de la branche mobile 86 comporte deux pattes d'accrochage 92,94, sensiblement perpendiculaires à l'axe d'articulation X. Ces pattes 92,94 sont destinées à immobiliser axialement le ressort de poussée 82 et, à cet effet, sont interposées entre la face interne du flasque fixe 24 et un épaulement 96 de l'organe de commande, visible sur la figure 3.

Les pattes d'accrochage 92,94 s'étendent transversalement à l'organe de commande 32, de part et d'autre de ce dernier, et sont logées, de préférence, dans un décrochement 98 de la face interne du flasque fixe 24 compensant l'épaisseur de ces pattes.

En variante, l'articulation peut comporter deux ressorts de poussée 82, coopérant avec deux méplats 90, agencés de façon diamétralement opposée dans le flasque fixe 24.

Bien entendu, on peut envisager d'autres formes du ressort de poussée permettant de le placer en appui radial entre le bord du dégagement 88 et le méplat de positionnement 90 de manière à solliciter ce dernier dans une position coïncidant avec la position de repos précise de l'organe de commande.

Le fonctionnement des moyens de rappel élastique de l'organe de commande 32 se déduit clairement de leur description ci-dessus.

En particulier, on notera que lorsqu'on fait tourner l'organe de commande 32 de sa position de repos vers une position active de déplacement d'une des bagues 52,54, comme cela est représenté sur la figure 6, le ressort 76 à effet angulaire se déforme par augmentation de son diamètre. Le ressort 76 s'appuie par un de ses bords axiaux sur l'ergot 70,72 de la bague 52,54 qui reste fixe en renforçant ainsi l'assujettissement au flasque de liaison correspondant des leviers de couplage associés à cette bague.

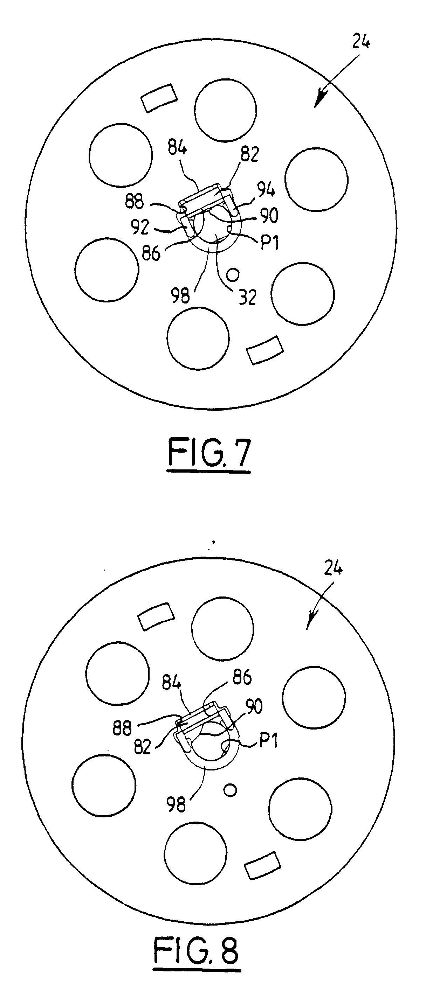

De même, lorsqu'on fait tourner l'organe de commande 32 dans un sens ou dans l'autre, à partir de sa position de repos, le ressort de poussée 82 se déforme élastiquement par rapprochement de ces branches 84,86, de manière à permettre la rotation de cet organe de commande 32 dans le palier P1, comme cela est représenté sur la figure 8.

L'articulation 20 comporte également des moyens de blocage de la seconde extrémité 36B des leviers de couplage 34a à 34d en position d'assujettissement.

Ces moyens de blocage sont activés uniquement lorsque les flasques de liaison 24,26 et le flasque-support 38 sont couplés entre eux, c'est-à-dire lorsque l'organe de commande 32 est en position de repos, et lorsque ces flasques 24,26,38 subissent un couple tendant à les découpler accidentellement.

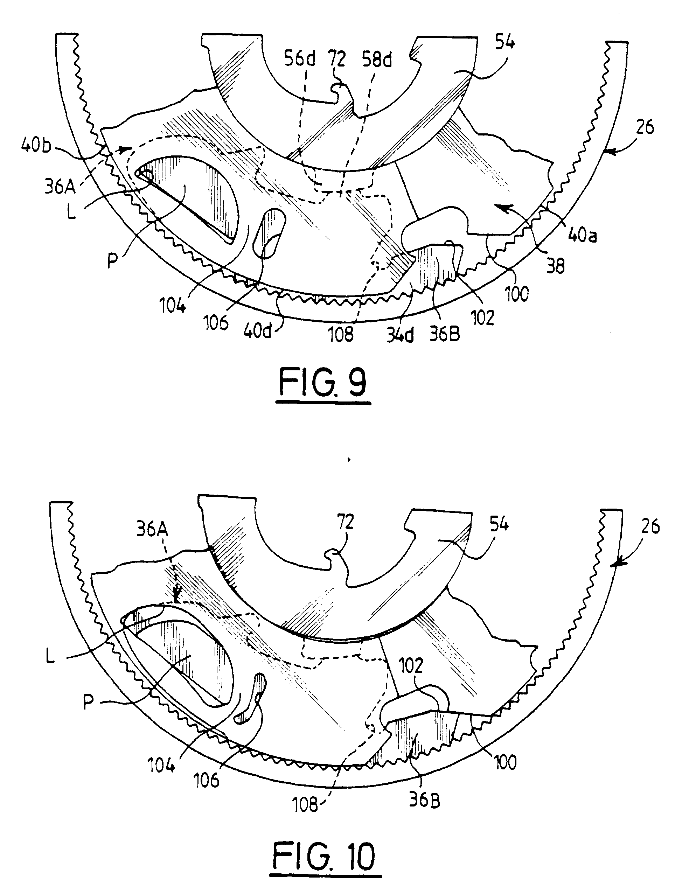

En se référant notamment aux figures 9 et 10, on voit que les moyens de blocage comprennent, pour chaque levier de couplage 34a à 34d, deux rampes complémentaires de blocage 100,102 ménagées respectivement sur le flasque-support 38 et sur la seconde extrémité 36B du levier de couplage, et d'autre part, une zone d'affaiblissement du flasque-support 38.

Chaque rampe de blocage 100 portée par le flasque-support 38 est ménagée sur un secteur 40a à 40d de ce flasque-support adjacent à un secteur 40a à 40d sur lequel est articulé le levier 34a à 34d, portant la rampe de blocage complémentaire 102.

Lorsqu'un levier de couplage 34a à 34d est en position d'assujettissement, les rampes de blocage 100,102 correspondantes sont écartées entre elles, comme cela est représenté sur les figures 4,5 et 9.

La zone d'affaiblissement du flasque-support 38, associée à un levier de couplage 34a à 34d correspondant, comporte de préférence une portion 104 de ce flasque-support 38 s'étendant entre la lumière de pivotement L et une lumière d'affaiblissement 106 ménagée dans le flasque-support 38, à proximité de la lumière de pivotement L et entre cette dernière et la rampe de blocage 100 portée par le flasque-support 38.

La lumière d'affaiblissement 106 peut avoir diverses formes, par exemple oblongue (comme cela est représenté notamment sur la figure 9) ou circulaire.

La zone d'affaiblissement du flasque-support, associée à chaque levier de couplage 34a à 34d, se déforme lorsque les flasques de l'articulation subissent un couple accidentel, de manière à permettre le déplacement relatif du levier de couplage par rapport au flasque-support 38 jusqu'à mise en contact des rampes de blocage 100,102, comme cela est représenté sur la figure 10. Ces rampes 100,102 coopèrent alors pour bloquer la seconde extrémité 36B du levier de couplage en position d'assujettissement dans laquelle les dentures de ce levier sont en prise avec celles du flasque de liaison correspondant.

De préférence, le contour intérieur courbe des leviers de couplage 34a à 34d comporte une échancrure 108 d'affaiblissement de ces leviers permettant, lorsque les flasques de l'articulation subissent un couple accidentel, une déformation de ces leviers par modification de leur courbure. Cette modification de courbure facilite la coopération des rampes de blocage 100,102.

L'articulation 20 est particulièrement bien adaptée pour résister à un couple subit accidentellement lorsque les flasques de liaison 24,26 sont couplés entre eux.

En effet, si le couple accidentel est appliqué dans le sens du coincement des cames de manoeuvre 56a à 56d avec les contre-cames de coincement 58a à 58d, l'assujettissement des leviers de couplage 34a à 34d aux flasques de liaison 24,26 correspondants est renforcé, ce qui empêche le découplage accidentel de ces flasques de liaison.

Si le couple accidentel est appliqué à l'encontre de l'effet de coincement entre les cames de manoeuvre 56a à 56d et les contre-cames de coincement 58a à 58d (c'est-à-dire si le couple accidentel est appliqué dans un sens d'écartement de l'axe de pivotement des leviers de couplage 34a à 34d et de la zone d'assujettissement de ces leviers), ce couple déforme les zones d'affaiblissement du flasque-support 38 de manière à faire coopérer les rampes de blocage 100,102 et renforcer l'assujettissement des leviers de couplage 34a à 34d aux flasques de liaison 24,26 correspondants.

Ainsi, quel que soit le sens du couple accidentel, il n'y a pas de risque de découplage des flasques de liaison 24,26.

L'invention ne se limite pas au mode de réalisation illustré sur les figures.

En particulier, l'articulation 20 selon l'invention n'est pas nécessairement une articulation du type à mémoire et peut être prévue, par exemple, pour réaliser uniquement la fonction de réglage de l'inclinaison du dossier sans la fonction de basculement de ce dernier. Dans ce cas, le flasque-support est constitué par le flasque de liaison fixe, l'articulation ne comportant qu'une paire de leviers de couplage, voire un seul levier de couplage.

## Revendications

1. Articulation pour siège, notamment pour véhicule automobile, du type comprenant
- au moins un flasque de liaison (24,26), destiné à être fixé à une assise (A) ou un dossier (D) du siège, et un flasque-support (38) pouvant être assujetti à l'assise et/ou au dossier, les flasques (24,26,38) étant montés rotatifs l'un par rapport à l'autre autour d'un axe d'articulation (X) qui leur est sensiblement perpendiculaire, et
- au moins un levier de couplage (34a à 34d) des flasques entre eux muni d'une première extrémité (36A) montée pivotante sur le flasque-support (38), autour d'un axe de pivotement sensiblement parallèle à l'axe d'articulation (X), de manière que le levier de couplage (34a à 34d) puisse pivoter entre, d'une part, une position d'assujettissement d'une seconde extrémité (36B) de ce levier au flasque de liaison (24,26), par coopération de formes complémentaires (42a à 42d,44a,44b,48), et d'autre part, une position de libération de cette seconde extrémité (36B),
caractérisée en ce qu'elle comprend de plus des moyens de blocage (100 à 104) de la seconde extrémité (36B) du levier en position d'assujettissement activés uniquement lorsque les flasques (24,26,38) sont couplés entre eux et subissent un couple tendant à les découpler accidentellement.

2. Articulation selon la revendication 1, caractérisée en ce que les moyens de blocage comprennent
- deux rampes complémentaires de blocage (100,102) portées respectivement par le flasque-support (38) et par la seconde extrémité (36B) du levier de couplage, ces rampes (100,102) étant écartées entre elles lorsque le levier de couplage est en position d'assujettissement, et
- une zone d'affaiblissement (104) du flasque-support (38) déformable lorsque les flasques (24,26,38) subissent le couple accidentel, de manière à permettre le déplacement relatif du levier de couplage (34a à 34d) par rapport au flasque-support (38) jusqu'à mise en contact des rampes de blocage (100,102) qui coopèrent pour bloquer la seconde extrémité (36B) du levier de couplage en position d'assujettissement au flasque de liaison (24,26).

3. Articulation selon la revendication 2, caractérisée en ce que l'axe de pivotement du levier de couplage (34a à 34d) est matérialisé par un pion de pivotement (P), porté par la première extrémité (36A) de ce levier, pivotant dans une lumière de pivotement (L) ménagée dans le flasque-support (38),
et en ce que la zone d'affaiblissement comporte une portion (104) du flasque-support s'étendant entre la lumière de pivotement (L) et une lumière d'affaiblissement (106) qui est ménagée dans le flasque-support (38) à proximité de la lumière de pivotement (L) et entre cette lumière de pivotement (L) et la rampe de blocage (100) portée par le flasque-support (38).

4. Articulation selon la revendication 2 ou 3, caractérisée en ce que le levier de couplage (34a à 34d) a une forme générale en arc, le contour intérieur de ce levier comportant une échancrure (108) d'affaiblissement de ce levier permettant, lorsque les rampes de blocage (100,102) coopèrent par effet du couple accidentel, une déformation du levier de couplage (34a à 34d) par modification de sa courbure.

5. Articulation selon l'une quelconque des revendications précédentes, caractérisée en ce qu'elle comporte un autre flasque (26,24) de liaison avec le dossier ou l'assise et au moins un autre levier de couplage (34a à 34d) du flasque-support (38) avec cet autre flasque de liaison (26,24), le flasque-support (38)étant logé entre les deux flasques de liaison (24,26), les deux leviers de couplage (34a à 34d) étant articulés respectivement sur deux faces opposées (38A,38B) du flasque-support (38).

6. Articulation selon la revendication 5, caractérisée en ce que les deux flasques de liaison (24,26) sont destinés à être fixés respectivement à l'assise (A) et au dossier (D) du siège, l'articulation comprenant de plus, des moyens de manoeuvre (32,52,54) des leviers de couplage (34a à 34d) entre une configuration de repos dans laquelle les leviers de couplage sont tous assujettis à leur flasque de liaison (24,26) correspondant, pour coupler ces derniers et immobiliser le dossier par rapport à l'assise, et deux configurations actives alternatives dans laquelle un seul des leviers de couplage (34a à 34d) est assujetti à son flasque de liaison (24,26) correspondant pour permettre, selon le cas, le réglage de l'inclinaison ou le rabattement temporaire du dossier.

7. Articulation selon la revendication 5 ou 6, caractérisée en ce qu'elle comprend une paire de leviers de couplage (34a à 34d) associés à chaque flasque de liaison (24,26) et disposés sensiblement symétriquement par rapport à l'axe d'articulation (X), les quatre leviers de couplage (34a à 34d) étant articulés en alternance sur les deux faces (38A,388) du flasque-support (38) et sur des secteurs (40a à 40d) de ce flasque-support décalés parallèlement à l'axe d'articulation (X), chaque rampe de blocage (100) portée par le flasque-support (38) étant ménagée sur un secteur (40a à 40d) de ce flasque-support (38) adjacent à un secteur (40a à 40d) sur lequel est articulé le levier de couplage (34a à 34d) portant la rampe de blocage complémentaire (102).

8. Siège pour véhicule automobile, caractérisé en ce qu'il comprend au moins une articulation (20) selon l'une quelconque des revendications précédentes.

## Patentansprüche

1. Gelenk für Sitze, insbesondere Kraftfahrzeugsitze, bestehend aus
- mindestens einer Verbindungsscheibe (24, 26), die dazu bestimmt ist, an einem Sitzelement (A) oder einer Rückenlehne (D) des Sitzes angebracht zu werden, und einer Tragscheibe (38), die mit dem Sitzelement und/oder der Rückenlehne fest verbunden werden kann, wobei die Scheiben (24, 26, 38) um eine zu ihnen im wesentlichen senkrechte Gelenkachse (X) gegeneinander verdrehbar montiert sind, und
- mindestens einem Hebel (34a bis 34d) zur gegenseitigen Kupplung der Scheiben, der ein erstes Ende (36A) aufweist, das auf der Tragscheibe (38) um eine zur Gelenkachse (X) im wesentlichen parallele Schwenkachse so verschwenkbar gelagert ist, dass der Kupplungshebel (34a bis 34d) zwischen einerseits einer Stellung der festen Verbindung eines zweiten Endes (36B) dieses Hebels mit der Verbindungsscheibe (24, 26) durch Zusammenwirken von ergänzenden Formen (42a bis 42d, 44a, 44b, 48) und andererseits einer Stellung der Freigabe dieses zweiten Endes (36B) verschwenkt werden kann,
dadurch gekennzeichnet, dass es außerdem Mittel (100 bis 104) zur Blockierung des zweiten Endes (36B) des Hebels in der Stellung der festen Verbindung aufweist, die nur aktiviert werden, wenn die Scheiben (24, 26, 38) miteinander gekuppelt sind und wenn auf sie ein Drehmoment einwirkt, das bestrebt ist, sie zufällig zu entkuppeln.

2. Gelenk nach Anspruch 1, dadurch gekennzeichnet, dass die Blockiermittel
- zwei ergänzende Blockierschrägen (100, 102) aufweisen, die an der Tragscheibe (38) bzw. an dem zweiten Ende (36B) des Kupplungshebels vorgesehen sind und die voneinander entfernt sind, wenn der Kupplungshebel in der Stellung der festen Verbindung ist, sowie
- einen Bereich (104) zur Schwächung der Tragscheibe (38), der verformbar ist, wenn auf die Scheiben (24, 26, 38) das zufällige Drehmoment einwirkt, so dass eine Relativbewegung des Kupplungshebels (34a bis 34d) bezüglich der Tragscheibe (38) zugelassen wird, bis die Blockierschrägen (100, 102) in Kontakt kommen, die nun zusammenwirken, um das zweite Ende (36B) des Kupplungshebels in der Stellung der festen Verbindung mit der Verbindungsscheibe (24, 26) zu blockieren.

3. Gelenk nach Anspruch 2, dadurch gekennzeichnet, dass die Schwenkachse des Kupplungshebels (34a bis 34d) von einem am ersten Ende (36A) dieses Hebels vorgesehenen Drehzapfen (P) gebildet ist, der in einer in der Tragscheibe (38) vorgesehenen Lageraussparung (L) drehbar gelagert ist,
und dass der Schwächungsbereich einen Bereich (104) der Tragscheibe umfasst, der sich zwischen der Lageraussparung (L) und einer Schwächungsaussparung (106) erstreckt, die in der Tragscheibe (38) in Nähe der Lageraussparung (L) und zwischen dieser Lageraussparung (L) und der an der Tragscheibe (38) vorgesehenen Blockierschräge (100) vorgesehen ist.

4. Gelenk nach Anspruch 2 oder 3, dadurch gekennzeichnet, dass der Kupplungshebel (34a bis 34d) im wesentlichen bogenförmig ist, wobei der Innenumriss dieses Hebels einen zu seiner Schwächung dienenden Ausschnitt (108) aufweist, der, wenn die Blockierschrägen (100, 102) durch die Wirkung des zufälligen Drehmoments zusammenwirken, eine Verformung des Kupplungshebels (34a bis 34d) durch Änderung seiner Krümmung zulässt.

5. Gelenk nach einem der vorhergehenden Ansprüche, dadurch gekennzeichnet, dass es eine weitere Scheibe (26, 24) zur Verbindung mit der Rückenlehne oder dem Sitzelement und mindestens einen weiteren Hebel (34a bis 34d) zur Kupplung der Tragscheibe (38) mit dieser weiteren Verbindungsscheibe (26, 24) aufweist, wobei die Tragscheibe (38) zwischen den beiden Verbindungsscheiben (24, 26) untergebracht ist und die beiden Kupplungshebel (34a bis 34d) auf zwei entgegengesetzten Seiten (38A, 38B) der Tragscheibe (38) angelenkt sind.

6. Gelenk nach Anspruch 5, dadurch gekennzeichnet, dass die beiden Verbindungsscheiben (24, 26) dazu bestimmt sind, an dem Sitzelement (A) bzw. an der Rückenlehne (B) des Sitzes angebracht zu werden, wobei das Gelenk außerdem Mittel (32, 52, 54) zum Verstellen der Kupplungshebel (34a bis 34d) zwischen einer Ruhestellung, in der die Kupplungshebel alle mit ihrer jeweiligen Verbindungsscheibe (24, 26) fest verbunden sind, um diese zu kuppeln und die Rückenlehne bezüglich des Sitzelements zu blockieren, und zwei alternativen aktiven Stellungen aufweist, in denen nur einer der Kupplungshebel (34a bis 34d) mit seiner jeweiligen Verbindungsscheibe (24, 26) fest verbunden ist, um, je nach Fall, die Neigungsverstellung oder das zeitweilige Herunterklappen der Rückenlehne zu gestatten.

7. Gelenk nach Anspruch 5 oder 6, dadurch gekennzeichnet, dass es ein Paar von Kupplungshebeln (34a bis 34d) aufweist, die jeder Verbindungsscheibe (24, 26) zugeordnet sind und im wesentlichen bezüglich der Gelenkachse (X) symmetrisch angeordnet sind, wobei die vier Kupplungshebel (34a bis 34d) abwechselnd auf der einen und auf der anderen der beiden Seiten (38A, 38B) der Tragscheibe (38) und auf parallel zur Gelenkachse (X) gegeneinander versetzten Sektoren (40a bis 40d) dieser Tragscheibe angelenkt sind, wobei jede an der Tragscheibe (38) vorgesehene Blockierschräge (100) auf einem Sektor (40a bis 40d) dieser Tragscheibe (38) gebildet ist, der einem Sektor (40a bis 40d) benachbart ist, an dem der die ergänzende Blockierschräge (102) tragende Kupplungshebel (34a bis 34d) angelenkt ist.

8. Kraftfahrzeugsitz, dadurch gekennzeichnet, dass er mindestens ein Gelenk (20) nach einem der vorhergehenden Ansprüche aufweist.

## Claims

1. A joint for a seat, notably for a motor vehicle, of the type comprising:
- at least one connecting flange (24, 26) intended to be fixed to a seat (A) or a back (D) of the seat and a support flange (38) which can be fixed to the seat and/or the back, the flanges (24, 26, 38) being mounted such that they can rotate in relation to each other around an axis of articulation (X) which is approximately perpendicular to them, and
- at least one coupling lever (34a to 34d) which joins the flanges together provided with a first end (36A) mounted in such a manner that it can pivot on the support flange (38) about an axis of rotation approximately parallel to the axis of articulation (X) in such a manner that the coupling lever (34a to 34d) can pivot between, firstly, a position in which a second end (36B) of this lever is fixed to the connecting flange (24, 26) by the co-operation of complementary shapes (42a to 42d, 44a, 44b, 48) and, secondly, a position in which this second end (36B) is released,
characterised in that it comprises in addition means (100 to 104) of blocking the second end (36B) of the lever in the fixed position which are activated only when the flanges (24, 26, 38) are joined together and are subjected to a torque likely to separate them accidentally.

2. A joint in accordance with Claim 1 characterised in that the blocking means comprise:
- two complementary blocking ramps (100, 102) borne by the support flange (38) and the second end (36B) of the coupling lever respectively, these ramps (100, 102) being spaced apart from each other when the coupling lever is in the fixed position, and
- an area of weakening (104) of the flange support (38) which is deformable when the flanges (24, 26, 38) are subject to the accidental torque in such a manner as to allow the relative movement of the coupling lever (34a to 34d) in relation to the support flange (38) until it comes into contact with the blocking ramps (100, 102) which co-operate to block the second end (36B) of the coupling lever in the position in which it is fixed to the connecting flange (24, 26).

3. A joint in accordance with Claim 2 characterised in that the axis of rotation of the coupling lever (34a to 34d) is represented by a pivoting lug (P) borne on the first end (36A) of this lever which pivots in a pivoting slot (L) provided in the support flange (38),
and in that the area of weakening comprises a portion (104) of the support flange extending between the pivoting slot (L) and a weakening slot (106) which is provided in the support flange (38) near to the pivoting slot (L) and between this pivoting slot (L) and the blocking ramp (100) borne by the support flange (38).

4. A joint in accordance with Claim 2 or 3 characterised in that the coupling lever (34a to 34d) has the general shape of an arc, the internal contour of this lever having a scalloped section (108) which weakens this lever permitting the deformation of the coupling lever (34a to 34d) by the modification of its curve when the blocking ramps (100, 102) co-operate due to the accidental torque.

5. A joint in accordance with one of the preceding claims characterised in that it comprises another connecting flange (26, 24) connecting it to the back or seat and at least one other coupling lever (34a to 34d) joining the support flange (38) to this other connecting flange (26, 24), the support flange (38) being seated between the two connecting flanges (24, 26) and the two coupling levers (34a to 34d) being articulated on two opposing faces (38A, 38B) of the support flange (38) respectively.

6. A joint in accordance with Claim 5 characterised in that the two connecting flanges (24, 26) are intended to be fixed to the seat (A) and the back (D) of the seat respectively, the joint also comprising means (32, 52, 54) of manoeuvring the coupling levers (34a to 34d) between an idle configuration in which the coupling levers are all fixed to their corresponding connecting flanges (24, 26) to connect these latter and immobilise the back in relation to the seat, and two alternative active configurations in which only one of the coupling levers (34a to 34d) is fixed to its corresponding connecting flange (24, 26) in order to permit the adjustment of the angle or the temporary folding down of the back as required.

7. A joint in accordance with Claim 5 or 6 characterised in that it comprises a pair of coupling levers (34a to 34d) for each connecting flange (24, 26) arranged approximately symmetrically in relation to the axis of articulation (X), the four coupling levers (34a to 34d) being articulated alternately on the two faces (38A, 38B) of the support flange (38) and on sectors (40a to 40d) of this support flange offset in parallel with the axis of articulation (X), each blocking ramp (100) borne by the support flange (38) being provided on a sector (40a to 40d) of this support flange (38) adjacent to a sector (40a to 40d) on which is articulated the coupling lever (34a to 34d) bearing the additional blocking ramp (102).

8. A seat for a motor vehicle characterised in that it comprises at least one joint (20) in accordance with one of the preceding claims.
